# EUROPÄISCHE PATENTANMELDUNG

(11) **EP 3 757 795 A1**
(43) Veröffentlichungstag der Anmeldung: **30.12.2020**
(21) Anmeldenummer: 20177125.0
(22) Anmeldetag: 28.05.2020
(51) Int. Cl.: G06F 11/36, G01R 31/28, G05B 17/02, G05B 19/042

(54) **VERFAHREN UND VORRICHTUNG ZUR OPTIMALEN AUFTEILUNG VON TESTFÄLLEN AUF UNTERSCHIEDLICHE TESTPLATTFORMEN**

(30) Priorität: 28.06.2019 DE 102019209540
(71) Anmelder: Robert Bosch GmbH, 70442 Stuttgart (DE)
(72) Erfinder: Heinz, Thomas, 70469 Stuttgart (DE); Sohns, Joachim, 71636 Ludwigsburg (DE); Gladisch, Christoph, 71272 Renningen (DE)

(57) **Zusammenfassung**

Verfahren (20) zum Optimieren von Testfällen (21),
gekennzeichnet durch folgende Merkmale:
- anhand durch die Simulation (22) gewonnener Simulationsdaten wird ein Simulationsmetamodell (24) gebildet,
- anhand in der Testumgebung (23) vorgenommener Messungen wird ein Realitätsmetamodell (25) gebildet,
- den Simulationsdaten und Messungen anhaftende Unsicherheiten werden zusammengeführt, indem entweder die Summe (26) gebildet wird oder der worst case aus beiden Berechnungen verwendet wird oder für jede betrachtete Unsicherheit jeweils der worst case betrachtet wird,
- anhand der Kombination (26) der Unsicherheiten wird ein die Simulation (22) und Testumgebung (23) umfassendes Metamodell (27) gebildet und
- mittels des Metamodelles (27) wird eine suchbasierte Optimierung (28) der Testfälle (21) vorgenommen.

## Beschreibung

Die vorliegende Erfindung betrifft ein Verfahren optimalen Aufteilung von Testfällen auf unterschiedliche Testplattformen. Die vorliegende Erfindung betrifft darüber hinaus eine entsprechende Vorrichtung, ein entsprechendes Computerprogramm sowie ein entsprechendes Speichermedium.

### Stand der Technik

In der Softwaretechnik wird die Nutzung von Modellen zur Automatisierung von Testaktivitäten und zur Generierung von Testartefakten im Testprozess unter dem Oberbegriff "modellbasiertes Testen" (*model-based testing,* MBT) zusammengefasst. Hinlänglich bekannt ist beispielsweise die Generierung von Testfällen aus Modellen, die das Sollverhalten des zu testenden Systems beschreiben.

Insbesondere eingebettete Systeme (*embedded systems*) sind auf schlüssige Eingangssignale von Sensoren angewiesen und stimulieren wiederum ihre Umwelt durch Ausgangssignale an unterschiedlichste Aktoren. Im Zuge der Verifikation und vorgelagerter Entwicklungsphasen eines solchen Systems wird daher in einer Regelschleife dessen Modell (*model in the loop,* MiL), Software (*software in the loop,* SiL), Prozessor (*processor in the loop,* PiL) oder gesamte Hardware (*hardware in the loop,* HiL) gemeinsam mit einem Modell der Umgebung simuliert. In der Fahrzeugtechnik werden diesem Prinzip entsprechende Simulatoren zur Prüfung elektronischer Steuergeräte je nach Testphase und -objekt mitunter als Komponenten-, Modul- oder Integrationsprüfstände bezeichnet.

DE10303489A1 offenbart ein derartiges Verfahren zum Testen von Software einer Steuereinheit eines Fahrzeugs, bei dem durch ein Testsystem eine von der Steuereinheit steuerbare Regelstrecke wenigstens teilweise simuliert wird, indem Ausgangssignale von der Steuereinheit erzeugt werden und diese Ausgangssignale der Steuereinheit zu ersten Hardware-Bausteinen über eine erste Verbindung übertragen werden und Signale von zweiten Hardware-Bausteinen als Eingangssignale zur Steuereinheit über eine zweite Verbindung übertragen werden, wobei die Ausgangssignale als erste Steuerwerte in der Software bereitgestellt werden und zusätzlich über eine Kommunikationsschnittstelle in Echtzeit bezogen auf die Regelstrecke zum Testsystem übertragen werden.

Derartige Simulationen sind auf verschiedenen Gebieten der Technik verbreitet und finden beispielsweise Einsatz, um eingebettete Systeme in Elektrowerkzeugen, Motorsteuergeräten für Antriebs-, Lenk- und Bremssysteme oder gar autonomen Fahrzeugen in frühen Phasen ihrer Entwicklung auf Tauglichkeit zu prüfen. Dennoch werden die Ergebnisse von Simulationsmodellen nach dem Stand der Technik aufgrund fehlenden Vertrauens in ihre Zuverlässigkeit nur begrenzt in Freigabeentscheidungen einbezogen.

### Offenbarung der Erfindung

Die Erfindung stellt ein Verfahren zur optimalen Aufteilung von Testfällen auf unterschiedliche Testplattformen, eine entsprechende Vorrichtung, ein entsprechendes Computerprogramm sowie ein entsprechendes Speichermedium gemäß den unabhängigen Ansprüchen bereit.

Der erfindungsgemäße Ansatz fußt auf der Erkenntnis, dass die Validierung von Modellen und Bewertung ihrer Vertrauenswürdigkeit in der Regel auf Grundlage speziell ausgewählter Validierungsmessungen erfolgt. In Arbeitskreisen und Projekten werden Kriterien dafür erarbeitet, wann eine Simulation als zuverlässig gilt und reale Tests durch Simulationen ersetzt werden können. Die Validierung von Simulationsmodellen erfolgt vielfach auf Grundlage von Expertenwissen und quantitativen Metriken. Es scheint noch keine etablierte Methode zu geben, mit der auf Grundlage von Validationsmessungen die Genauigkeit eines simulationsbasieren Tests quantitativ bestimmt werden kann.

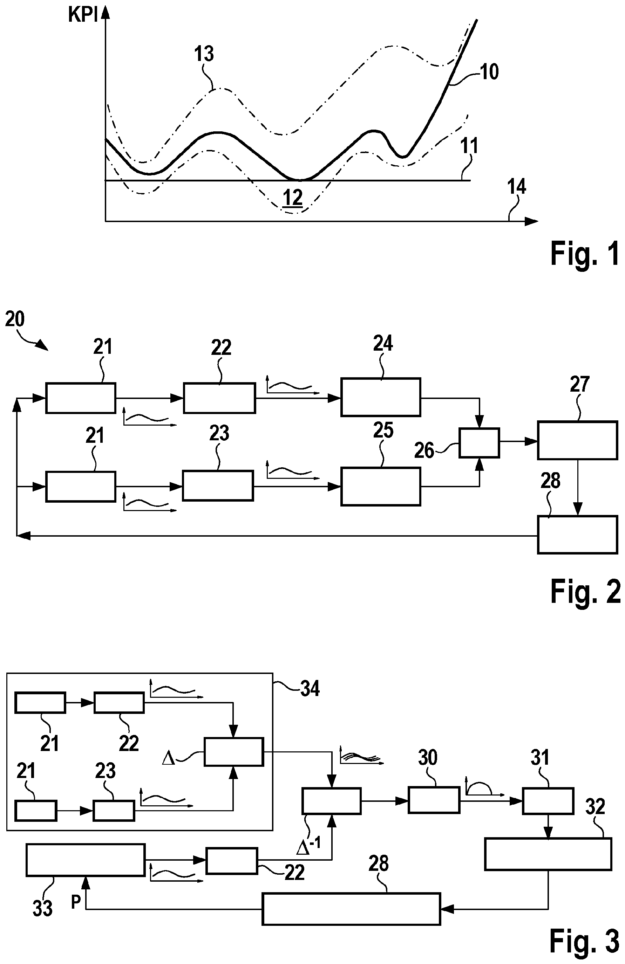

Dem vorgeschlagenen Verfahren liegt vor diesem Hintergrund die Idee zugrunde, die Anforderung (*requirement*) an einen Testfall so zu formalisieren, dass dieser dann erfüllt ist, wenn eine Größe (KPI), die das requirement charakterisiert, oberhalb einer vorgegebenen Schwelle liegt und dabei Unsicherheiten berücksichtig werden. Diese Unsicherheiten können durch Unsicherheiten im System, statistische Streuungen von Parametern oder Modellfehler verursacht sein. Im Falle des Modelles (10) gemäß Figur 1 ist im unterhalb des Schwellwertes (11) liegenden Bereich (12) eines Konfidenzintervalls (13) das Risiko groß, dass der Testfall nicht erfüllt wird. Das Konfidenzintervall kann auf unterschiedliche Weise definiert werden. Außerdem können die obere und untere Schranke auf unterschiedliche Weise berechnet werden, beispielsweise durch:
- Ein Metamodell, z.B. ein Gaußprozess oder anderes Model des maschinellen Lernens, das den Modellfehler auf Ebene der Signale beschreibt und auf dessen Grundlage der Fehler des Test Fall KPI berechnet wird oder
- die Variation von Signalen im Rahmen bekannter Fehlermuster und Unsicherheiten und die Auswertung des Testfalls für diese künstlich erzeugten Signale oder
- die Bestimmung von Unsicherheiten im System und die Variation von zugehörigen Parametern oder
- Extrapolation und Interpolation der vorhandenen Information im Rahmen eines Metamodells

In der Praxis können nur für eine begrenzte Zahl von Punkten im Parameterraum (14) reale Tests durchgeführt werden. Suchbasiertes Testen (*search-based testing,* SBT) wird verwendet, um in einem iterativen Prozess anhand vorgegebener Kriterien den jeweils nächsten Punkt im Parameterraum zu bestimmen, an dem eine Simulation oder ein reales Experiment durchgeführt werden soll.

Auf Grundlage der Simulationen und Messungen, die zur Modellvalidierung durchgeführt wurden, wird eine Aussage über die Vertrauenswürdigkeit der Simulation bezüglich eines Testfalls getroffen. Das vorgestellte Verfahren ermöglicht es, die Genauigkeit eines Simulationsmodells bezüglich eines Testfalls zu bewerten, auch wenn der betreffende Test nicht mit dem gleichen Parametersatz real durchgeführt wurde. Des Weiteren liefern die vorgestellten Methoden eine Teststrategie zur Ermittlung der Testfälle in einem großen Testraum. Die Algorithmen liefern darüber hinaus Indikatoren, welche Testfälle real und welche Testfälle simulationsbasiert ermittelt werden. In der vorliegenden Schrift werden mehrere Fragestellungen untersucht. Für jede dieser Fragestellungen gibt es unterschiedliche Herangehensweisen, die sich darin unterscheiden, dass der Tester oder Simulationsingenieur über unterschiedliche Informationen verfügt.

Eine erste Fragestellung betrifft die Abschätzung von Unsicherheiten auf Grundlage von Simulationsmodellen und realen Messdaten und Auswertung, wie stark sich diese Unsicherheiten auf das Ergebnis von Testfällen auswirken. Darauf aufbauend werden neue Testfälle bestimmt, die in der Simulation oder im realen Test untersucht werden.

Eine zweite Fragestellung betrifft die Ableitung von Anforderungen an die Genauigkeit von Simulationsmodellen auf Grundlage von Testfällen. Die benötigte Genauigkeit hängt von der Auswahl der Testfälle ab. Diese Anforderungen können zur Definition zusätzlicher Validierungsmessungen oder zur Verbesserung des Modells verwendet werden.

Die Validierung von Modellen wird üblicherweise auf der Grundlage von vorgegebenen Stimuli durchgeführt. Die Ergebnisse der Simulation und der realen Messung werden anhand von Expertenwissen und quantitativen Metriken (z. B. nach ISO 18571) verglichen. Ist das Modell validiert, so wird davon ausgegangen, dass die Simulation auch bei anderen Stimuli ein glaubwürdiges Ergebnis liefert.

Der vorliegende Ansatz ermöglicht es, einen unmittelbaren Zusammenhang zwischen Validierungsmessungen und der Simulationsgenauigkeit bezüglich eines Testfalls herzustellen. Die Methode liefert Indikatoren dafür, welche Testfälle real und welche simulationsbasiert getestet werden.

Durch die in den abhängigen Ansprüchen aufgeführten Maßnahmen sind vorteilhafte Weiterbildungen und Verbesserungen des im unabhängigen Anspruch angegebenen Grundgedankens möglich.

### Kurze Beschreibung der Zeichnungen

Ausführungsbeispiele der Erfindung sind in den Zeichnungen dargestellt und in der nachfolgenden Beschreibung näher erläutert. Es zeigt:
Figur 1 Das Test Case KPI in Abhängigkeit vom Parameter (p), die Unsicherheitsbänder und den Grenzwert für den Testfall.
Figur 2 ein auf Metamodellen basierendes Verfahren gemäß einer ersten Ausführungsform.
Figur 3 die Verwendung heuristischer, parametrierbarer Fehlermodelle gemäß einer zweiten Ausführungsform.
Figur 4 die Verwendung künstlicher Signalmuster für den Fehler unter Berücksichtigung der bekannten Simulationsgenauigkeit gemäß einer dritten Ausführungsform.
Figur 5 das Ableiten der benötigten Simulationsgenauigkeit.
Figur 6 das Ableiten der benötigten Simulationsqualität auf Grundlage künstlicher Fehlermuster.
Figur 7 schematisch eine Arbeitsstation gemäß einer zweiten Ausführungsform der Erfindung.

### Ausführungsformen der Erfindung

Figur 2 illustriert die Verwendung von Metamodellen (24, 25), z.B. Gaußprozesse, zur Auswahl neuer Testfälle (21). Ausgehend von bestimmten Simulationsmodellen einschließlich modellierter Unsicherheiten werden auf diese Weise neue Testfälle für Simulation (22) und reale Tests (23) gesucht.

Zur Erstellung der Metamodelle (24, 25) werden sowohl reale Messungen als auch Simulationsdaten verwendet. Diese Metamodelle bei Vorhandensein neuer Daten aktualisiert und erfassen mitunter die Unsicherheiten aus den Daten. Die zwei Metamodelle (24, 25) werden zu einem neuen Metamodel (27) mit einer Methode (23) zusammengefasst sobald die Metamodelle (24, 25) aufgrund neuer Daten (22, 23) aktualisiert werden. Das Metamodel (27) erlaubt somit sowohl eine Prädiktion von neuen Daten als auch eine kombinierte Prädiktion der Unsicherheiten basieren aus Daten aus der Simulation (22) und realen Messungen (23). Die Zusammenfassung (27) kann durch unterschiedliche Ansätze realisiert werden, wie zum Beispiel (aber nicht ausschließlich):
- die Berechnung der Mittelwerte, Minima oder Maxima der prädizierten Werte und der Unsicherheiten aus den Metamodellen (24, 25); oder
- Erstellung eines neuen Gaußprozesses aus den prädizierten Daten aus (24) und (25)

Das kombinierte Metamodel (27) wird von einer Testgenerierungsmethode (28) verwendet um neue Testfälle (21) zu erzeugen. Eine Ausführungsform für (28) ist zum Beispiel SBT. Die Methoden, die in den folgenden Abschnitten detaillierter dargestellt werden, können als Spezialfälle oder Ergänzungen dieses generischen Verfahrens (20) aufgefasst werden.

Figur 3 veranschaulicht die Verwendung heuristischer Fehlermuster zur Auswahl neuer Testfälle (21). Gegeben sind auch hier die Simulationsmodelle, wobei Unsicherheiten nicht explizit als solche modelliert sein müssen, sowie ein Set von Simulationsdaten mit zugehörigen realen Messungen. Gesucht sind neue Testfälle (21) für Simulation (22) und reale Tests (23), bei denen das Risiko eines Fehlschlages hoch (32) ist.

Im ersten Schritt wird hierzu die Abweichung (Δ) zwischen den realen Messungen und den Experimenten betrachtet. Aus dem Signalvergleich werden typische Fehlermuster abgeleitet, etwa Phasenverschiebung, Amplitudenfehler oder typische additive Signale wie Schwingungen. Diese Fehler werden an einem oder mehreren Punkten im Testraum unter der Annahme betrachtet, dass an verschiedenen Punkten im Testraum die simulierten Signalverläufe ähnliche Fehlermuster aufweisen und - z. B. im Hinblick auf nicht modellierte physikalische Effekte oder ähnliche Typen von Unsicherheiten - neu skaliert werden können. Es wird nicht betrachtet, wie diese Fehler zustande kommen. Stattdessen werden heuristische Fehlermodelle verwendet, welche die beobachteten Abweichungen abbilden. An Punkten im Testraum, die nicht real betrachtet wurden, werden anhand dieser Fehlermodelle ein "Simulationsfehler" und die Auswirkung von Unsicherheiten simuliert (22). Mit Hilfe der ermittelten Unsicherheiten und der SBT-Methode (28) werden die Bereiche im Parameterraum ermittelt, an denen das Risiko einer Verletzung des Testfalls hoch (32) ist.

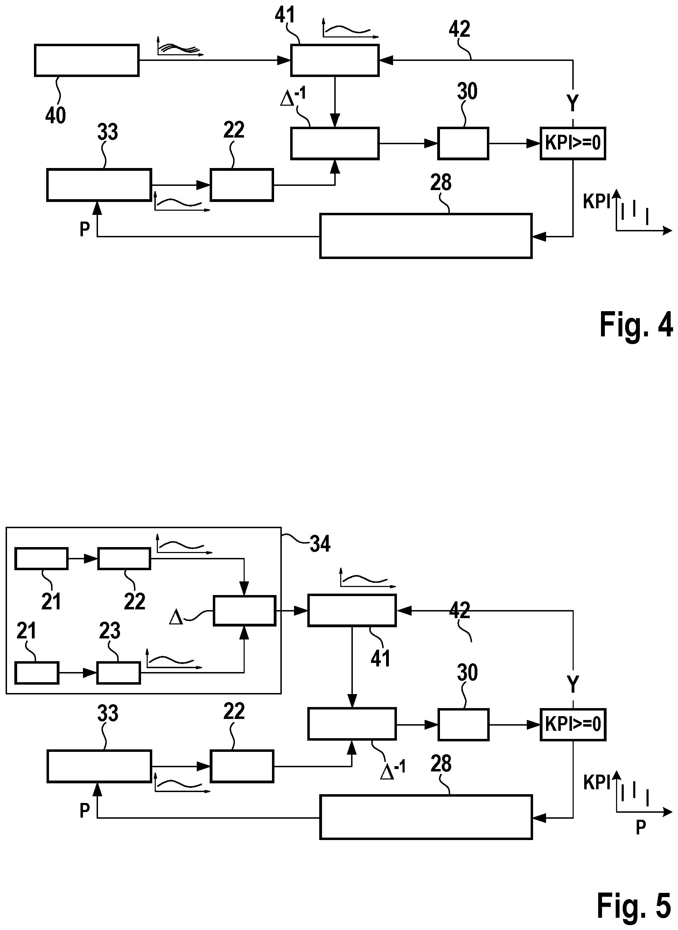

Figur 4 zeigt die Erzeugung künstlicher Fehlermuster (40) zur Auswahl neuer Testfälle (21). Gegeben sind auch hier die Simulationsmodelle, wobei Unsicherheiten nicht explizit als solche modelliert sein müssen, sowie deren mit einer signalbasierten Metrik (KPI) ermittelte Genauigkeit. Gesucht sind abermals neue Testfälle (21) für Simulation (22) und reale Tests (23), bei denen das Risiko eines Fehlschlages hoch (32) ist.

Das Verfahren ähnelt dem in Figur 3 dargestellten Verfahren. Zur Simulation (22) der Testfälle (21) werden jedoch nicht gemessene Fehler verwendet ("heuristisches Fehlermodell"). Stattdessen werden typische Signalmuster (40) erzeugt, welche mit dem Typ der Validierungsmetrik (KPI) und der ermittelten Signalgenauigkeit verträglich sind, z. B. durch Erzeugung von Phasenverschiebungen oder Addieren von Rauschmustern, die innerhalb eines bestimmten Korridors liegen.

Figur 5 beleuchtet das Ableiten von Anforderungen an die Genauigkeit von Simulationsmodellen auf Grundlage heuristischer Fehlermodelle. Gegeben sind Simulationsmodelle, ein Set von Simulationsdaten und zugehörigen realen Messungen sowie ein heuristisches, parametrisierbares Fehlermodell. Ziel dieser Ausführungsform ist das iterative Auffinden neuer Testfälle (21), bei denen eine hohe Modellgenauigkeit gefordert ist. Diese Testfälle (21) werden real (23) und simulativ (21) untersucht, um zu ermitteln, ob die benötigte Simulationsgenauigkeit gegeben ist.

Auch dieses Verfahren ähnelt dem in Figur 3 dargestellten Verfahren mit dem Unterschied, dass für jeden Testfall (21) in einer inneren Schleife die Größe der Fehler (41) solange modifiziert wird, bis der Testfall (21) fehlschlägt. Der letzte Wert, bei dem der Testfall (21) noch erfüllt ist, gibt den maximal erlaubten Fehler (41) an und definiert damit die benötigte Simulationsqualität. Der SBT-Algorithmus (28) sucht nach Punkten im Testraum, an denen eine hohe Modellgenauigkeit benötigt wird. An diesen Punkten kann die Modellgenauigkeit durch reale Messungen (23) und Simulationen (22) überprüft werden.

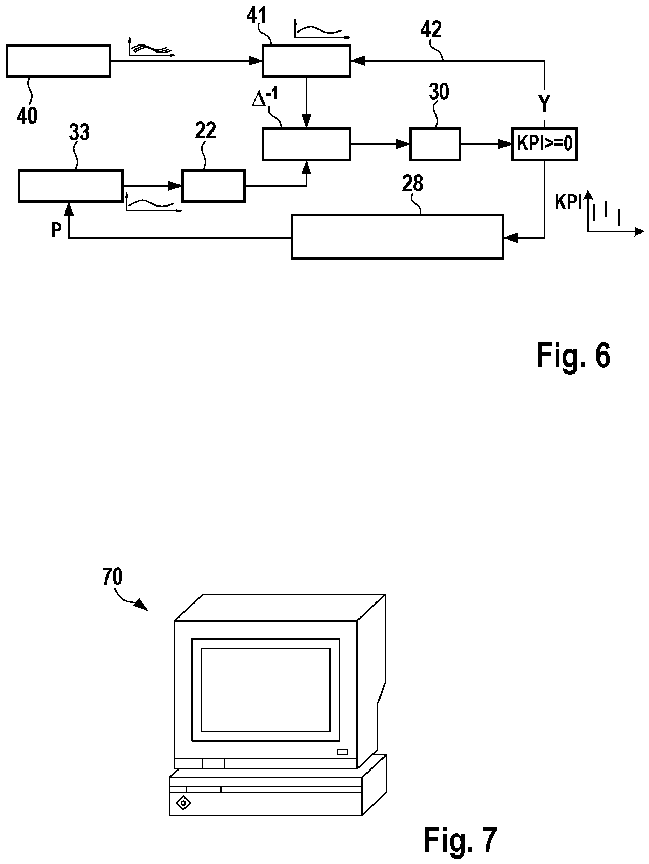

Figur 6 schließlich illustriert das Ableiten von Anforderungen an die Genauigkeit von Simulationsmodellen auf Grundlage heuristischer Fehlermodelle. Gegeben sind hier wieder die Simulationsmodelle, wobei Unsicherheiten nicht explizit als solche modelliert sein müssen, sowie deren mit einer signalbasierten Metrik (KPI) ermittelte Genauigkeit. Ziel auch dieser Ausführungsform ist das iterative Auffinden neuer Testfälle (21), bei denen eine hohe Modellgenauigkeit gefordert ist. Diese Testfälle (21) werden real (23) und simulativ (22) untersucht, um zu ermitteln, ob die benötigte Simulationsgenauigkeit gegeben ist.

Dieses Verfahren ähnelt dem in Figur 5 dargestellten Verfahren mit dem Unterschied, dass zur Simulation der Testfälle (21) nicht gemessene Fehler verwendet werden ("heuristisches Fehlermodell"). Stattdessen werden typische Signalmuster (40) erzeugt, welche mit dem Typ der Validierungsmetrik (KPI) und der ermittelten Signalgenauigkeit verträglich sind, z. B. durch Erzeugung von Phasenverschiebungen, Verschiebungen im Frequenzbereich, Filtern (z.B. Hochpass- oder Tiefpassfilter), Addieren von Rauschmustern, die innerhalb eines bestimmten Korridors liegen oder andere etablierte Methoden der Signalverarbeitung.

Dieses Verfahren kann beispielsweise in Software oder Hardware oder in einer Mischform aus Software und Hardware beispielsweise in einer Arbeitsstation (70) implementiert sein, wie die schematische Darstellung der Figur 7 verdeutlicht.

## Patentansprüche

1. Verfahren (20) zur optimalen Aufteilung von Testfällen auf unterschiedliche Testplattformen (21) für eine Simulation (22) und Testumgebung (23) eines insbesondere in einen zumindest teilautonomen Roboter oder Fahrzeug eingebetteten Systems,
**gekennzeichnet durch** folgende Merkmale:
- anhand durch die Simulation (22) gewonnener Simulationsdaten wird ein Simulationsmetamodell (24) gebildet,
- anhand in der Testumgebung (23) vorgenommener Messungen wird ein Realitätsmetamodell (25) gebildet, die Simulationsdaten und Messdaten sowie die jeweils anhaftenden Unsicherheiten werden in (26) zusammengefasst, wie zum Beispiel durch die Berechnung der Mittelwerte, Minima oder Maxima der prädizierten Werte und der Unsicherheiten aus den Metamodellen (24, 25) oder die Erstellung eines neuen Gaußprozesses aus den prädizierten Daten aus den Modellen (24, 25),
- anhand der Zusammenfassung (26) der Unsicherheiten wird ein die Simulation (22) und Testumgebung (23) umfassendes Metamodell (27) gebildet und
- mittels des Metamodelles (27) wird eine suchbasierte Optimierung (28) der Testfälle (21) vorgenommen.

2. Verfahren (20) nach Anspruch 1,
**gekennzeichnet durch** folgende Merkmale:
- aus den Simulationsdaten und den Messungen werden für die Simulation (22) typische Fehlermuster abgeleitet,
- anhand der Fehlermuster wird eine Auswertung (30) mindestens eines der Testfälle (21) vorgenommen,
- mittels der Auswertung (30) wird die Verteilung (31) der Testergebnisse in Abhängigkeit eines Parameters (p) ermittelt, welcher die Testfälle zur getesteten Anforderung parametriert
- anhand der Verteilung (30) wird eine vom Parameter (p) abhängige Wahrscheinlichkeit eines Fehlschlags (32) des Testfalles (21) untersucht und
- mittels des Parameters (p) wird eine Parametrisierung (33) der Testfälle (21) vorgenommen.

3. Verfahren (20) nach Anspruch 2,
**gekennzeichnet durch** folgendes Merkmal:
- anhand des Leistungsindex (KPI) werden für einen Fehler (41) typische Signalmuster (40) erzeugt.

4. Verfahren (20) nach Anspruch 3,
**gekennzeichnet durch** folgendes Merkmal:
- eine Amplitude bzw. Größe des Fehlers wird für eines der Signalmuster skaliert (42).

5. Verfahren (20) nach einem der Ansprüche 2 bis 4,
**dadurch gekennzeichnet, dass**
die Fehler- oder Signalmuster (40) mindestens eines der folgenden umfassen:
- eine Phasenverschiebung,
- Amplitudenfehler,
- zeitabhängige additive Signale,
- Verschiebungen im Frequenzbereich
- Faltungen mit einem Kernel im Zeitbereich (z.B. typisches Hochpass- oder Tiefpassverhalten), oder
- andere bekannte Fehlermuster, welche durch eine etablierte Metrik abgebildet oder erfasst werden

6. Verfahren (20) nach einem der Ansprüche 1 bis 5,
**gekennzeichnet durch** folgendes Merkmal:
- das Bilden der Metamodelle (24, 25, 27) erfolgt mittels Bayesscher Statistik oder eines anderen etablierten Verfahrens zur Bildung von Metamodellen, z.B. aus dem Bereich des maschinellen Lernens.

7. Verfahren (20) nach einem der Ansprüche 1 bis 6,
**gekennzeichnet durch** folgende Merkmale:
- die Simulation (22) und die Messungen werden entweder einmalig zu Beginn des Verfahrens (20) vorgenommen oder während des Verfahrens für unterschiedliche Parametrierungen des Testfalls wiederholt, wobei die Ausführung weiterer Tests sowohl simulativ als auch im realen Experiment durchgeführt werden kann, und
- Daten aus neu durchgeführten Messungen oder Simulationen werden zur Adaption der Metamodelle oder zur Anpassung der Fehlermodelle verwendet.

8. Verfahren (20) nach einem der Ansprüche 1 bis 7, **dadurch gekennzeichnet, dass** durch die Optimierung (28) eine automatische Verbesserung von durch die Simulation (22) erkannten Fehlern des Systems erfolgt.

9. Computerprogramm, welches eingerichtet ist, das Verfahren (20) nach einem der Ansprüche 1 bis 8 auszuführen.

10. Maschinenlesbares Speichermedium, auf dem das Computerprogramm nach Anspruch 9 gespeichert ist.

11. Vorrichtung (70), die eingerichtet ist, das Verfahren (20) nach einem der Ansprüche 1 bis 8 auszuführen.
